# EUROPEAN PATENT SPECIFICATION

(11) **EP 4 037 818 B1**
(45) Date of publication and mention of the grant of the patent: **14.09.2022**
(21) Application number: 20820929.6
(22) Date of filing: 09.12.2020
(51) Int. Cl.: B01J 8/00, B01J 19/24

(54) **APPARATUS AND PROCESS FOR THE GAS-PHASE POLYMERIZATION**
VORRICHTUNG UND VERFAHREN ZUR GASPHASENPOLYMERISIERUNG
APPAREIL ET PROCÉDÉ POUR LA POLYMÉRISATION EN PHASE GAZEUSE

(30) Priority: 11.12.2019 EP 19215247
(43) Date of publication of application: 10.08.2022
(73) Proprietor: Basell Polyolefine GmbH, 50389 Wesseling (DE)
(72) Inventor: MEI, Giulia, 44122 Ferrara (IT); PENZO, Giuseppe, 46100 Mantova (IT); RINALDI, Riccardo, 44122 Ferrara (IT); AZZARELLO, Emanuele, 44122 Ferrara (IT); PESARE, Rosario, deceased (IT)
(74) Representative: LyondellBasell
(86) International application number: PCT/EP2020/085233
(87) International publication number: WO 2021/116156

(56) References cited:
- EP-A1- 3 321 288
- WO-A1-00/02929
- WO-A1-2012/031986
- WO-A1-2018/115236
- US-A1- 2007 049 782

## Description

### FIELD OF THE INVENTION

The present disclosure provides an apparatus for carrying out a gas-phase olefin polymerization. The present disclosure further provides processes for preparing an olefin polymer at temperatures of from 20°C to 200°C and pressures of from 0.5 MPa to 10 MPa in the presence of a polymerization catalyst.

### BACKGROUND OF THE INVENTION

Polyolefins are by far the largest class of synthetic polymers made and used today. Their success is mainly due to low costs of production, light weight and high chemical resistance. A wide range of mechanical properties is possible through the use of copolymerization, blending and additives to make products from elastomers to thermoplastics to high strength fibers. Although well-established since the 1930's, improving the production process and performance of these materials is still the subject of ongoing research.

Today, a widely-used technology for the production of polyolefins is the gas-phase polymerization in which solid polyolefin particle are produced in a gaseous reaction medium containing the monomers. Commonly, the generated heat of reaction is removed by withdrawing the reaction gas mixture from the reactor, cooling the gas mixture in a heat exchanger and sending the cooled gas mixture then back into the reactor. The composition of the polymer can be controlled by the composition of the gas-phase. However, limits of gas-phase polymerization processes are the difficulty of controlling the molecular weight distribution of the obtained polymers, in particular when it comes to broadening the molecular weight distribution, or to obtain copolymers having different comonomer compositions. Since the breadth of the molecular weight distribution and the comonomer distribution have an influence on both the rheological behavior of the polymer, and hence the processability of the melt, and on the final mechanical properties of the product, it would be attractive to be able to adapt the structure of the prepared polymers according to need. One major focus of research and industry has therefore been on strategies to be able to influence the composition of polyolefins.

WO 97/04015 A1 refers to a process for the gas-phase polymerization of α-olefins carried out in a first and in a second interconnected polymerization zone, to which one or more of α-olefins are fed in the presence of a polymerization catalyst under reaction conditions and from which the polymer product is discharged, wherein the growing polymer particles flow upward through the first of the polymerization zones under fast fluidization conditions, leave the first polymerization zone and enter the second of the polymerization zones through which the polymer particles flow in a densified form under the action of gravity, leave the second polymerization zone and are at least partially reintroduced into the first polymerization zone, thus establishing a circulation of polymer between the two polymerization zones.

Based on the technology described in WO 97/04015 A1, WO 00/02929 A1 further suggests a process wherein means are provided which are capable of totally or partially preventing the gas mixture present in the riser, i.e. the first polymerization zone, from entering the downcomer, i.e. the second polymerization zone, and a gas and/or liquid mixture having a composition different from the gas mixture present in the riser is introduced into the downcomer in order to achieve in-reactor made blends of polymers having different compositions. Similarly,

US 10,781,273 B2 describes apparatuses for producing multimodal polyolefins which comprise a reactor comprising a riser, a downcomer, a separator connected to the top of the downcomer, optionally via a liquid barrier in the top portion of the downcomer, and two conduits connecting the top of the riser with the separator and the bottom of the downcomer with the bottom of the riser.

WO 2012/031986 A1 suggests a gas-phase polymerization reactor having interconnected polymerization zones comprising a riser through which the polymer particles flow upward under fast fluidization conditions or transport conditions; and a downcomer through which the polymer particles flow downward in a densified form under the action of gravity, the bottom of said downcomer being connected to the lower region of said riser by means of a transport section, said transport section being designed as a bend descending from the downcomer to the riser. The reactor is further provided with a line for feeding a carrier gas at the inlet of the transport section and the transport section is provided with a gas distribution grid extending from the inlet of the transport section for an angle of at least 50° along the bending of the transport section.

WO 2019/154756 A1 discloses polymerization reactors for the gas-phase polymerization of olefins comprising a gas recycle line for withdrawing reaction gas from the reactor, leading the reaction gas through a heat exchanger for cooling and feeding the reaction gas back to the reactor, wherein the gas recycle line is equipped with the heat-exchanger, a centrifugal compressor comprising variable guide vanes, and a butterfly valve.

Although there has been a continuous development of the gas-phase polymerization, there is still the need for further improvement, in particular with respect to the operability of gas-phase polymerization reactors having interconnected polymerization zones in combination with a full flexibility in controlling the polymer composition of the produced polymers. The gas-phase polymerization reactors should provide a good separation efficiency in the gas/solid separation zone installed on top of the downcomer, reduced polymer friction among adjacent polymer particles and between the polymer particles and the reactor wall, a low pressure drop in the connecting elements connecting the riser, the downcomer and the gas recycle line and the intersections between the connecting elements and riser, downcomer or gas recycle line, and a good immersion and homogenization of the polymer particles leaving the downcomer in the gas stream coming from the gas recycle line and fast fluidizing or transporting the polymer particles in the riser in combination with an ease of construction and in particular the possibility to limit the overall height of the reactor.

### SUMMARY OF THE INVENTION

The present disclosure provides an apparatus for carrying out a gas-phase olefin polymerization comprising
- a first polymerization zone adapted and arranged for growing polymer particles to flow upward under fast fluidization or transport conditions comprising a cylindrical segment having a diameter D01;
- a second polymerization zone adapted and arranged for the growing polymer particles to flow downward comprising a cylindrical upper part having a diameter D05 and a cylindrical lower part having a diameter D06;
- a gas/solid separation zone of a cylindrical shape having a diameter D04 adapted and arranged for separating growing polymer particles from a gas flow which is arranged on top of the upper part of the second polymerization zone and is directly connected to the upper part of the second polymerization zone;
- a tubular first connecting element having a diameter D03 adapted and arranged for connecting the cylindrical segment of the first polymerization zone to the gas/solid separation zone;
- a tubular gas recycle line having a diameter D08 adapted and arranged for connecting the gas/solid separation zone to the first polymerization zone;
- a tubular transition segment having a diameter D02 arranged between the gas recycle line and the cylindrical segment of the first polymerization zone; and
- a tubular second connecting element having a diameter D09 adapted and arranged for connecting the lower part of the second polymerization zone to the transition segment;

wherein the gas recycle line is equipped with a compressor adapted and arranged for circulating gas in the gas recycle line and a heat exchanger adapted and arranged for removing heat from the gas flowing in the gas recycle line;
wherein the ratio of D04 to D05 is from 1.0 to 1.5 and the ratio of D05 to D06 is from 1.2 to 2;
wherein the first connecting element is a bend having a radius R03 or is a tubular element comprising one or more bend parts having one or more radiuses R03 and one or more linear parts and the ratio of R03 to D03 is from 1 to 6 and the ratio of D03 to D01 is from 0.3 to 0.85;
wherein the first connecting element comprises a connecting piece, the first connecting element and the gas/solid separation zone are connected by the connecting piece, and the connection of the connecting piece to the gas/solid separation zone is tangential and has an inclination so that the central axis of the connecting piece and the horizontal form an angle A16 and the angle A16 is in the range from 0° to 40°;
wherein the transition segment is a bend or is a tubular element comprising one or more bend parts and one or more linear parts and the ratio of D08 to D02 is 1.0 to 2.2; and
wherein the second connecting element is a bend or is a tubular element comprising one or more bend parts and one or more linear parts.

In some embodiments, the central axis of the second connecting element at the position where the second connecting element is connected to the transition segment and the horizontal form an angle A02 and the angle A02 is in the range from 0° to 40°.

In some embodiments, the apparatus further comprises a line for feeding a barrier gas and/or liquid into the upper part of the second polymerization zone.

In some embodiments, the apparatus further comprises a line for feeding a transport gas into an upper part of the second connecting element.

In some embodiments, the second connecting element is provided with a gas distribution grid extending from the upper end of the second connecting element for an angle A09 of at least 50° along the bending of the second connecting element.

In some embodiments, the second polymerization zone comprises a throttling valve and the apparatus further comprises a line for feeding a dosing gas into the lower part of the second polymerization zone at one or more positions above the throttling valve.

In some embodiments, the compressor is a centrifugal compressor comprising variable guide vanes and the gas recycle line is further equipped with a butterfly valve.

In some embodiments, the variable guide vanes are arranged upstream of the centrifugal compressor and the butterfly valve is arranged downstream of the centrifugal compressor

In some embodiments, the gas/solid separation zone has a height H04 and the ratio of H04 to D04 is 2.5 to 4.5.

In some embodiments, the upper part of the second polymerization zone has a height H05 and the ratio of H05 to D05 is 2 to 4.

In some embodiments, the apparatus is part of a series of polymerization reactors.

The present disclosure further provides a process for carrying out a gas-phase olefin polymerization in the apparatus of any of claims 1 to 11 at temperatures of from 20°C to 200°C and pressures of from 0.5 MPa to 10 MPa in the presence of a polymerization catalyst, comprising feeding one or more olefins into the apparatus, contacting the olefins and the polymerization catalyst under reaction conditions and discharging the polymer product from the apparatus, wherein the growing polymer particles flow upward through the first polymerization zone under fast fluidization or transport conditions, leave the first polymerization zone, pass through the gas/solid separation zone and enter the second polymerization zone where the polymer particles flow downward under the action of gravity, leave the second polymerization zone and are at least partially reintroduced into the first polymerization zone, thus establishing a circulation of polymer between the first polymerization zone and the second polymerization zone, wherein the second polymerization zone comprises a bed of densified polymer particles.

In some embodiments, the gas mixture present in the first polymerization zone is completely or partially prevented from entering the upper part of the second polymerization zone by introducing a gas or liquid into the second polymerization zone via a feeding line, and the gas mixture present in the second polymerization zone differs from the gas mixture present in the first polymerization zone.

In some embodiments, the surface of the bed of densified polymer particles is located in the upper part of the second polymerization zone.

In some embodiments, the polymerization is a homopolymerization of ethylene or a copolymerization of ethylene and one or more other olefins selected from the group consisting of 1-butene, 1-hexene and 1-octene or the polymerization is a homopolymerization of propylene or a copolymerization of propylene and one or more other olefins selected from the group consisting of ethylene, 1-butene and 1-hexene.

### BRIEF DESCRIPTION OF THE DRAWINGS

Figure 1 shows schematically an embodiment of the apparatus according to the present disclosure.
Figure 2 is an enlarged excerpt of a top part of a second polymerization zone according to the present disclosure.
Figure 3 shows schematically a top view on an embodiment of the apparatus according to the present disclosure.
Figures 4 and 5 show schematically two preferred embodiments of first connecting elements of the present disclosure.
Figures 6 and 7 show schematically two preferred embodiments of transition segments and second connecting elements of the present disclosure.

### DETAILED DESCRIPTION OF THE INVENTION

Within the course of the present disclosure, the inventors have found that by adapting the design of apparatuses for carrying out gas-phase olefin polymerizations comprising a first polymerization zone in which growing polymer particles flow upward under fast fluidization or transport conditions and comprising a second polymerization zone in which the growing polymer particles flow downward, i.e. by adapting the design of so-called multizone circulation reactors (MZCR), and paying special attention to the geometric ratios among the different parts of the apparatuses, it is possible to provide a good separation efficiency in the gas/solid separation zone installed on top of the second polymerization zone, to have reduced polymer friction among adjacent polymer particles and between the polymer particles and the walls of the apparatus, to obtain a low pressure drop in the connecting elements connecting the first polymerization zone, the second polymerization zone and the gas recycle line and the intersections between the connecting elements and first polymerization zone, second polymerization zone or gas recycle line, and to achieve a good immersion and homogenization of the polymer particles leaving the second polymerization zone in the gas stream coming from the gas recycle line and fast fluidizing or transporting the polymer particles in the first polymerization zone. At the same time, the apparatuses are easy to construct and it is possible to limit the overall height of the apparatuses.

The present disclosure accordingly provides an apparatus for carrying out a gas-phase olefin polymerization comprising
- a first polymerization zone adapted and arranged for growing polymer particles to flow upward under fast fluidization or transport conditions;
- a second polymerization zone adapted and arranged for the growing polymer particles to flow downward;
- a gas/solid separation zone adapted and arranged for separating growing polymer particles from a gas flow which is arranged on top of the second polymerization zone and is directly connected to the second polymerization zone;
- a first connecting element adapted and arranged for connecting the top of the first polymerization zone to the gas/solid separation zone;
- a gas recycle line adapted and arranged for connecting the gas/solid separation zone to the bottom of the first polymerization zone; and
- a second connecting element adapted and arranged for connecting the bottom of the second polymerization zone to the bottom of the first polymerization zone.

In preferred embodiments of the present disclosure, a line for catalyst feed or for feed of polymer particles from an upstream polymerization reactor is arranged on the first polymerization zone and a polymer discharge line is located at a bottom portion of the second polymerization zone. The introduction of make-up monomers, comonomers, hydrogen and/or inert components may occur at various points along the first or the second polymerization zone or at the gas recycle line.

Olefins which may be polymerized in the apparatus of the present disclosure are especially 1-olefins, i.e. hydrocarbons having terminal double bonds, without being restricted thereto. Preference is given to nonpolar olefinic compounds. Particularly preferred 1-olefins are linear or branched C₂-C₁₂-1-alkenes, in particular linear C₂-C₁₀-1-alkenes such as ethylene, propylene, 1-butene, 1-pentene, 1-hexene, 1-heptene, 1-octene, 1-decene or branched C₂-C₁₀-1-alkenes such as 4-methyl-1-pentene, conjugated and nonconjugated dienes such as 1,3-butadiene, 1,4-hexadiene or 1,7-octadiene. It is also possible to polymerize mixtures of various 1-olefins. Suitable olefins also include ones in which the double bond is part of a cyclic structure which can have one or more ring systems. Examples are cyclopentene, norbornene, tetracyclododecene or methylnorbornene or dienes such as 5-ethylidene-2-norbornene, norbornadiene or ethylnorborna-diene. It is also possible to polymerize mixtures of two or more olefins.

The apparatus of the present disclosure can be used for the homopolymerization or copolymerization of ethylene or propylene. Preferred comonomers in propylene polymerization are up to 40 wt.% of ethylene, 1-butene and/or 1-hexene, preferably from 0.5 wt.% to 35 wt.% of ethylene, 1-butene and/or 1-hexene. As comonomers in ethylene polymerization, preference is given to using up to 20 wt.%, more preferably from 0.01 wt.% to 15 wt.% and especially from 0.05wt. % to 12 wt.% of C₃-C₈-1-alkenes, in particular 1-butene, 1-pentene, 1-hexene and/or 1-octene. Particular preference is given to polymerizations in which ethylene is copolymerized with from 0.1 wt.% to 12 wt.% of 1-hexene and/or 1-butene.

The apparatus of the present disclosure comprises a first polymerization zone adapted and arranged for growing polymer particles to flow upward under fast fluidization or transport conditions. Such polymerization zones are commonly designated as risers. The first polymerization zone comprises a cylindrical segment having a diameter D01. Within the first polymerization zone, fast fluidization conditions or transport are established by a stream of a reaction gas mixture flowing from the bottom of the first polymerization zone to the top of the first polymerization zone at a velocity higher than the transport velocity of the polymer particles. The velocity of the reaction gas mixture is preferably from 0.5 m/s to 15 m/s and in particular from 0.8 m/s to 5 m/s. The terms "transport velocity" and "fast fluidization conditions" are well known in the art and used herein as defined in "D. Geldart, Gas Fluidization Technology, page 155 et seq., J. Wiley & Sons Ltd., 1986".

The apparatus of the present disclosure further comprises a second polymerization zone adapted and arranged for the growing polymer particles to flow downward. Such polymerization zones are commonly designated as downcomers. Other common designations for such a polymerization unit are "moving bed" unit or reactor or "settled bed" unit or reactor. The second polymerization zone comprises a cylindrical upper part having a diameter D05 and a cylindrical lower part having a diameter D06. Within the second polymerization zone, the growing polymer particles preferably flow downward in a densified form under the action of gravity. As used herein, the term "densified form" of the polymer means that the ratio between the mass of polymer and the reactor volume is higher than 80% of the "poured bulk density" of the resulting polymer. For examples, when a polymer bulk density is equal to 420 kg/m³, a "densified form" of the polymer means that the polymer mass/reactor volume ratio is at least 336 kg/m³. The "poured bulk density" of a polymer is a parameter measured according to DIN EN ISO 60:1999. Typically, the second polymerization zone contains a bed of growing polymer particles, which moves downwards in a substantially plug flow mode. By "plug flow mode" it is meant that there is little or preferably no backmixing of the polymer particles. In preferred embodiments, the polymer particles flow downwards with a velocity of from 0.01 m/s to 0.7 m/s, preferably from 0.1 m/s to 0.6 m/s, and more preferably from 0.15 m/s to 0.5 m/s.

The apparatus of the present disclosure further comprises a gas/solid separation zone of a cylindrical shape adapted and arranged for separating growing polymer particles from a gas flow. The gas/solid separation zone is arranged on top of the upper part of the second polymerization zone and is directly connected to the upper part of the second polymerization zone. The gas/solid separation zone has a diameter D04. In the gas/solid separation zone, the mixture of growing polyolefin particles and reaction gas coming from the first polymerization zone through the first connection element is separated in reaction gas and polymer particles. The polymer particles enter the second polymerization zone and the separated reaction gas mixture coming from the first polymerization zone is transferred into the gas recycle line for being recycled to the first polymerization zone.

Preferably, the apparatus of the present disclosure comprises a line for feeding a gas and/or liquid into the upper part of the second polymerization zone. Preferably, the gas and/or liquid is a barrier fluid which is fed in form of a gas and/or liquid mixture. Feeding a barrier fluid allows establishing different polymerization conditions in the first and in the second polymerization zone by partially or totally prevented reaction gas mixture of the first polymerization zone from entering the second polymerization zone. The barrier fluid should have a suitable composition, different from that of the reaction gas mixture present in the first polymerization zone. The amount of added barrier fluid is preferably adjusted in a way that an upward flow of gas countercurrent to the flow of the polymer particles is generated at the top of the second polymerization zone, acting as a barrier to the gas mixture entrained with the polymer particles coming from the gas/solid separation zone. The barrier fluid comes preferably from a recycle gas stream and is more preferably obtained by partly condensing the stream. As a consequence, the barrier fluid may contain, besides the monomers to be polymerized, also inert compounds used as a polymerization diluent like nitrogen or alkanes having from 1 to 10 carbon atoms, hydrogen or other components of the reaction gas mixture.

In preferred embodiments of the present disclosure, the surface of the bed of densified polymer particles is located in the upper part of the second polymerization zone. Preferably, the gas and/or liquid acting as barrier fluid for partially or totally preventing the reaction gas mixture of the first polymerization zone from entering the second polymerization zone is fed into the bed of densified polymer particles at a position close to the surface of the bed of densified polymer particles.

In preferred embodiments of the present disclosure, the apparatus further comprises additional feeding lines for feeding a gas and/or a liquid into the second polymerization zone. These additional feeding lines may be utilized for replacing reacted monomers and for controlling the gas flow within the second polymerization zone. The feed streams preferably comprise the main monomer of the polymerization and may further comprise one or more comonomers, inert components such as propane, or hydrogen. Depending on the amounts of gas and/or a liquid added to the second polymerization zone and the pressure conditions within the second polymerization zone, the gaseous medium surrounding the polymer particles can be designed to move downwards concurrently with the polymer particles or upward countercurrently to the polymer particles. When feeding liquid streams to the second polymerization zone, these liquid streams preferably vaporize within the second polymerization zone, contributing to the composition of the reaction gas mixture within the second polymerization zone. When operating the second polymerization zone with more than one additional feed stream, the feeding points for introducing the gas and/or liquid into the second polymerization zone are preferably evenly distributed over the height of the second polymerization zone. It is also possible to feed through the different feeding lines gas and/or liquid mixtures of different composition and in this way establishing in different parts of the second polymerization zone sub-zones having different reaction gas compositions resulting in the production of polymer of different composition.

The apparatus of the present disclosure is characterized in that the ratio of the diameter of the gas/solid separation zone D04 to the diameter of the upper part of the second polymerization zone D05, i.e. the ratio of D04 to D05, is from 1.0 to 1.5, preferably from 1.05 to 1.4 and more preferably from 1.08 to 1.3. Keeping the ratio of the diameter of the gas/solid separation zone to the diameter of the upper part of the second polymerization zone in such a range allows as well to have an efficient gas/solid separation in the separation zone, i.e. to have a very limited carry-over of polymer particles in the gas leaving the separation zone, as to ensure a good separation of the reaction gas mixture present in the first polymerization zone from the reaction gas mixture present within the second polymerization zone.

In preferred embodiment of the present disclosure, the gas/solid separation zone has a height H04 and the ratio of the height of the gas/solid separation zone H04 to the diameter of the gas/solid separation zone D04, i.e. the ratio of H04 to D04, is from 2.5 to 4.5, preferably from 2.8 to 4.2 and more preferably from 2.9 to 4. Keeping the ratio of the height of the separation zone to the diameter of the separation zone in such a range allows for an effective separation of the gas/solid mixture introduced into the separation zone from the first polymerization zone. Further, polymer carry-over in the gas leaving the separation zone can be avoided or sensibly reduced, even in cases where the level of polymer particles in the second polymerization zone is particularly high.

The apparatus of the present disclosure is further characterized in that the ratio of the diameter of the upper part of the second polymerization zone D05 to the diameter of the lower part of the second polymerization zone D06, i.e. the ratio of D05 to D06, is from 1.2 to 2, preferably from 1.3 to 1.8 and more preferably from 1.4 to 1.7. Designing the second polymerization zone in such a way facilitates the separation of the reaction gas mixture present in the first polymerization zone and the gas mixture present in the second polymerization zone. Constructing the second polymerization zone with an upper part of a larger diameter than the diameter of a lower part results in a lower velocity of the polymer particles in the upper part of the second polymerization zone, where the barrier gas and/or liquid is introduced, than in the lower part of the second polymerization zone, avoiding fluidization which would prevent the barrier from being effective.

It was further found that the risk of an overflow of the upper part of the second polymerization zone, which would negatively affect the separation efficacy of the gas/solid separation zone, could be minimized by not only ensuring a sufficient height of the upper part of the second polymerization zone but also by ensuring a large enough diameter D05 of the upper part of the second polymerization zone. In preferred embodiments, the upper part of the second polymerization zone has a height H05 and the ratio of the height of the upper part of the second polymerization zone H05 and the diameter of the upper part of the second polymerization zone D05, i.e. the ratio of H05 to D05 is 2 to 4, preferably 2 to 3.8, more preferably 2 to 3.6.

In preferred embodiments, the gas/solid separation zone and the upper part of the second polymerization zone are connected by a first connecting part, wherein the diameter of the first connecting part decreases from the diameter of the gas/solid separation zone D04 to the diameter of the upper part of the second polymerization zone D05. The upper part of the second polymerization zone and the lower part of the second polymerization zone are preferably connected by way of a second connecting part, wherein the diameter of the second connecting part decreases from the diameter of the upper part of the second polymerization zone D05 to the diameter of the lower part of the second polymerization zone D06. In preferred embodiments of the first and/or of the second connecting part, the diameter of the first and/or of the second connecting part decreases constantly. The first connecting part and the second connecting part then have a frusto-conical shape. It is however also possible that the first and/or the second connecting part have a shape of a spherical frustum or the diameter decreases in another way. Preferably, the first connecting part has a frusto-conical shape. The surface of the first connecting part and the vertical then form an angle A07a which is preferably 5° to 25°, more preferably 8° to 20° and in particular 10° to 15°. Also the second connecting part has preferably a frusto-conical shape. The surface of the second connecting part and the vertical then form an angle A07b which is preferably 5° to 25°, more preferably 8° to 20° and in particular 10° to 15°. It was found that a smooth downward flow of the polymer through the second polymerization zone could be ensured when the angles A07a and A07b were kept within the set limits and stagnation of the polymer powder, usually resulting in chunk formation, could be significantly reduced.

The apparatus of the present disclosure further comprises a tubular gas recycle line adapted and arranged for connecting the gas/solid separation zone to the first polymerization zone and a tubular transition segment arranged between the gas recycle line and the cylindrical segment of the first polymerization zone. The gas recycle line has a diameter D08 and the transition segment has a diameter D02.

In preferred embodiments, the gas recycle line and the transition segment are connected by a fourth connecting part, wherein the diameter of the fourth connecting part increases from the diameter of the gas recycle line D08 to the diameter of the transition segment D02. In preferred embodiments of the fourth connecting part, the diameter increases constantly and the fourth connecting part has a frusto-conical shape. It is however also possible that the diameter increases in another way.

The gas recycle line is equipped with a compressor adapted and arranged for circulating gas in the gas recycle line and a heat exchanger adapted and arranged for removing heat from the gas flowing in the gas recycle line. In preferred embodiments of the present disclosure, the compressor is a centrifugal compressor comprising variable guide vanes and the gas recycle line is further equipped with a butterfly valve. Preferably, the variable guide vanes are arranged upstream of the centrifugal compressor and the butterfly valve is arranged downstream of the centrifugal compressor. Circulating the gas in the gas recycle line by a centrifugal compressor comprising variable guide vanes and further equipping the gas recycle line with a butterfly valve allows in a simple manner to manipulate the gas flow rate while keeping constant the differential pressure across the compressor or to vary the differential pressure across the compressor while keeping the gas flow rate constant.

The transition segment is characterized to be a bend or a tubular element comprising one or more bend parts and one or more linear parts and the ratio of the diameter of the gas recycle line D08 to the diameter of the transition segment D02, i.e. the ratio of D08 to D02 is from 1.0 to 2.2, preferably from 1.2 to 2.0 and more preferably from 1.3 to 1.9.

In preferred embodiments, the transition segment and the cylindrical segment of the first polymerization zone are connected by a fifth connecting part, wherein the diameter of the fifth connecting part increases from the diameter of the transition segment D02 to the diameter of the cylindrical segment of the first polymerization zone D01. In preferred embodiments of the fifth connecting part, the diameter increases constantly and the fifth connecting part has a frusto-conical shape.

The shape of the transition segment comprised in the apparatus of the present disclosure contributes to the excellent operability of polymerizations in the apparatus by ensuring the fast fluidization or transport conditions in the first polymerization zone with a low pressure drop in the gas recycle line and in the intersection between gas recycle line and first polymerization zone, by giving an efficient pick up of the polymer particles coming from the second connecting element by the recycle gas stream with an immediate transport of the polymer particles into the first polymerization zone, and by providing a minimum polymer friction among adjacent polymer particles and between the polymer particles and the wall of the transition segment, and, at the same time, minimizes the required space below the polymerization zones and gives an improved layout of the recycle system.

The apparatus of the present disclosure further comprises a tubular first connecting element having a diameter D03 adapted and arranged for connecting the cylindrical segment of the first polymerization zone to the gas/solid separation zone and a tubular second connecting element having a diameter D09 adapted and arranged for connecting the lower part of the second polymerization zone to the transition segment.

The combination of a first polymerization zone in which growing polymer particles flow upward, a second polymerization zone in which growing polymer particles flow downward, a gas/solid separation zone arranged on top of the second polymerization zone, and two connecting elements connecting the top of the first polymerization zone to the gas/solid separation zone and connecting the bottom of the second polymerization zone to an element which is connected to the bottom of the first polymerization zone allows to establish a circulation of polymer particles between the two polymerization zones and the polymer particles are passed alternately a plurality of times through these zones.

The first connecting element is characterized to be a bend having a radius R03 or to be a tubular element comprising one or more bend parts having one or more radiuses R03 and one or more linear parts, and the ratio of the radius R03 of the bend or the one or more radiuses R03 of the one or more bend parts and the diameter of the first connecting element D03, i.e. the ratio of R03 to D03, is from 1 to 6, preferably from 1 to 5 and more preferably from 1 to 4. In some embodiments of the present disclosure, the radius R03 of the bend or the one or more radiuses R03 of the one or more bend parts may vary, i.e. different parts of the bend or different bend parts may have different radiuses provided that all radiuses R03 fulfil the condition of being in the defined ratio of the radius of the bend or of the one or more bend parts and the diameter of the first connecting element.

The first connecting element is further characterized in that the ratio of the diameter of the first connecting element D03 to the diameter of the cylindrical segment of the first polymerization zone D01, i.e. the ratio of D03 to D01, is from 0.3 to 0.85, preferably from 0.35 to 0.7 and more preferably from 0.4 to 0.65.

In preferred embodiments, the cylindrical segment of the first polymerization zone and the first connecting element are connected by a sixth connecting part, wherein the diameter of the sixth connecting part decreases from the diameter of the cylindrical segment of the first polymerization zone D01 to the diameter of the first connecting element D03. In preferred embodiments of the sixth connecting part, the diameter decreases constantly and the sixth connecting part has a frusto-conical shape. In other preferred embodiments, the sixth connecting part has a shape of a spherical frustum. It is however also possible that the diameter increases in another way.

The first connecting element is additional characterized in that the first connecting element comprises a connecting piece, that the first connecting element and the gas/solid separation zone are connected by the connecting piece, and that the connection of the connecting piece to the gas/solid separation zone is tangential and has an inclination so that the central axis of the connecting piece and the horizontal form an angle A16 which is in the range from 0° to 40°, preferably from 0° to 30° and more preferably from 0° to 20°.

Preferably, the shape of the connecting piece is adapted to the shape of the gas/solid separation zone, for example by having a diameter which is decreasing along the connecting piece. It is also possible that the connecting piece forms a bend, either with constant diameter or with decreasing diameter.

The shape of the first connecting element comprised in the apparatus of the present disclosure contributes to the excellent operability of polymerizations in the apparatus by providing a suitable transport velocity for the transfer of polymer particles from the first polymerization zone to the gas/solid separation zone, a minimum polymer friction among adjacent polymer particles and between the polymer particles and the wall of the first connecting element, and, at the same time, an improved separation efficiency in the gas/solid separation zone.

The second connecting element is characterized to be a bend or to be a tubular element comprising one or more bend parts and one or more linear parts.

In preferred embodiments, the lower part of the second polymerization zone and the second connecting element are connected by a third connecting part wherein the diameter of the third connecting part decreases from the diameter of the lower part of the second polymerization zone D06 to the diameter of the second connecting element D09. In preferred embodiments of the third connecting part, the diameter decreases constantly and the third connecting part has a frusto-conical shape. The surface of the third connecting part and the vertical then form an angle A07c which is preferably 5° to 25°, more preferably 8° to 20° and in particular 10° to 15°.

In preferred embodiments of the present disclosure, the central axis of the second connecting element at the position where the second connecting element is connected to the transition segment and the horizontal form an angle A02 and the angle A02 is in the range from 0° to 40°, preferably 5° to 30° and more preferably 10° to 25°.

In preferred embodiments of the present disclosure, the bottom of the second polymerization zone is equipped with a throttling valve for controlling the flow of the growing polymer particles leaving the second polymerization zone. The throttling valve is preferably a mechanical valve, such as a simple or double butterfly valve or a ball valve. Preferably, a stream of a gas which may be denominated as "dosing gas" is fed into the lower part of the second polymerization zone at one or more positions above the throttling valve, preferably shortly above the throttling valve, to facilitate the flow of the growing polymer particles through the throttling valve. The dosing gas is preferably taken from the gas recycle line downstream of the compressor. By varying the opening of the throttling valve and/or varying the flow rate of the dosing gas, it is possible to adjust the velocity of the polymer particles within the second polymerization zone. The throttling valve is preferably arranged at the bottom of the lower part of the second polymerization zone.

In preferred embodiments of the present disclosure, the apparatus further comprises a line for feeding a transport gas into an upper part of the second connecting element. Such a transport gas stream is preferably introduced into the second connecting element at a position close to the upper end of the second connecting element for supporting the transfer of the polymer particles from the bottom of the second polymerization zone to the bottom of the first polymerization zone. The transport gas is preferably taken from the gas recycle line downstream of the compressor. Preferably, the second connecting element is provided with a gas distribution grid extending from the upper end of the second connecting element for an angle A09 of at least 50° along the bending of the second connecting element.

The shape of the second connecting element comprised in the apparatus of the present disclosure contributes to the excellent operability of polymerizations in the apparatus by reliably transferring polymer particles from the second polymerization zone to the transition segment without formation of polymer deposition on the walls of the second connecting element, or formation of hot spots and melting of polymer in the second connecting element and by minimizing polymer friction among adjacent polymer particles and between the polymer particles and the wall of the second connecting element.

In preferred embodiments of the present disclosure, the diameters of the cylindrical segment of the first polymerization zone, of the upper and the lower parts of the second polymerization zone, of the gas/solid separation zone, of the first and the second connecting elements, of the gas recycle line, and of the transition segment are constant over the entire length of the component. A constant diameter within the meaning of the present disclosure is to be understood in that the respective diameter deviates from any given value by less than 5%, preferably by less than 2%, more preferably by less than 0.5% and specifically by less than 0.1%.

Within the course of the present disclosure it becomes evident that the first polymerization zone, i.e. the region of the apparatus in which growing polymer particles flow upward under fast fluidization or transport conditions, commonly not only comprises the cylindrical segment but that also the fifth and the sixth connecting parts and parts of the transition segment and the first connecting element. The second polymerization zone commonly comprises besides the upper and the lower cylindrical parts the third connecting part.

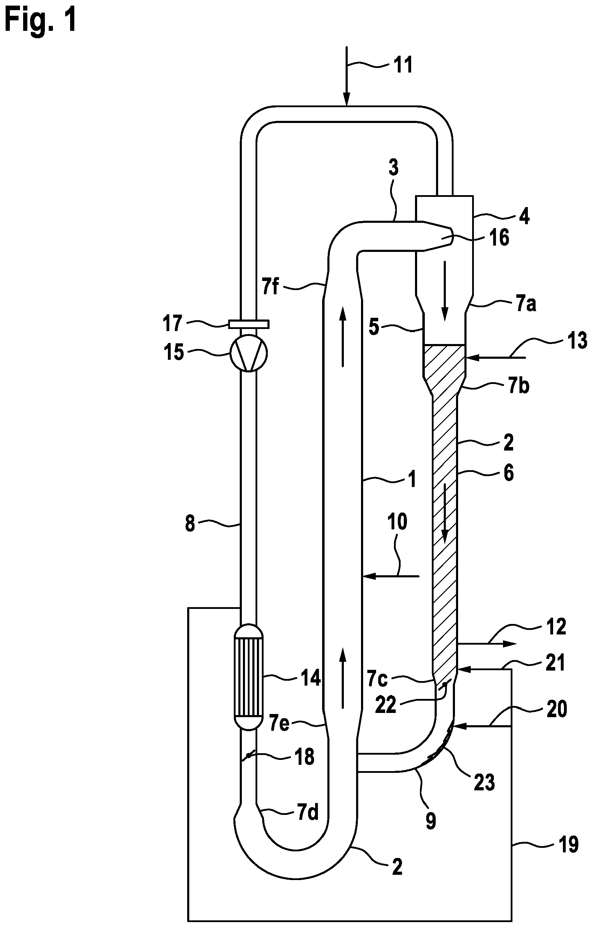

Figure 1 shows schematically an apparatus according to the present disclosure.

The apparatus shown in Figure 1 is an apparatus for polymerizing olefins in the gas-phase and comprises a first polymerization zone and a second polymerization zone which are repeatedly passed by the polyolefin particles. Within the first polymerization zone, the polyolefin particles flow upward under fast fluidization conditions. Within the second polymerization zone, the polyolefin particles flow downward under the action of gravity. The first polymerization zone comprises a cylindrical segment (1) and the second polymerization zone comprises a cylindrical upper part (5) and a cylindrical lower part (6). The cylindrical segment (1) of the first polymerization zone and the upper part (5) and the lower part (6) of the second polymerization zone are appropriately interconnected by a first connecting element (3) and a second connecting element (9).

After flowing through the cylindrical segment (1) of the first polymerization zone, the polyolefin particles and the reaction gas mixture are transferred into the solid/gas separation zone (4) through the first connecting element (3), which is connected to the gas/solid separation zone (4) by a connecting piece (16). From the solid/gas separation zone (4), the polyolefin particles enter the upper part (5) of the second polymerization zone. The gas/solid separation zone (4) is connected to the upper part (5) of the second polymerization zone by a first connecting part (7a) and the upper part (5) of the second polymerization zone is connected to the lower part (6) of the second polymerization zone by a second connecting part (7b). The lower part (6) of the second polymerization zone is connected to the second connecting element (9) by a third connecting part (7c).

The reaction gas mixture leaving the gas/solid separation zone (4) is recycled to the first polymerization zone by means of a gas recycle line (8) and a transition segment (2). The gas recycle line (8) is equipped with a centrifugal compressor (15) comprising variable guide vanes (17) and a heat exchanger (14). The gas recycle line (8) further comprises, downstream of heat exchanger (14), a butterfly valve (18). Between the compressor (15) and the heat exchanger (14), a line (19) branches off for conveying a part of the recycle gas as transport gas though line (20) into the second connecting element (9) and, as dosing gas, through line (21) into the lower part (6) of the second polymerization zone. The main amount of the recycle gas is transferred through the heat exchanger (14) and the butterfly valve (18) to the transition segment (2) and then entered into the first polymerization zone, so as to establish fast fluidization conditions therein. The gas recycle line (8) and the transition segment (2) are connected by a fourth connecting part (7d). The transition segment (2) is connected to the cylindrical segment (1) of the first polymerization zone by a fifth connecting part (7e).

For supplying the apparatus with fresh catalyst, a suspension of a solid catalyst component is fed via line (10) into the cylindrical segment (1) of the first polymerization zone or, if the apparatus is equipped with a prepolymerization vessel or is arranged in a series of polymerization reactors downstream of a polymerization reactor, growing polyolefin particles are fed via line (10) into the cylindrical segment (1) of the first polymerization zone.

The cylindrical segment (1) of the first polymerization zone is connected to the first connecting element (3) by a sixth connecting part (7f).

Polyolefin particles obtained in the apparatus are continuously discharged from the lower part (6) of the second polymerization zone via the discharge line (12). All or part of the make-up monomers, make-up comonomers, and optionally inert gases and/or process additives can be introduced into gas recycle line (8) via line (11). A gas and/or liquid can be fed via line (13) into the upper part (5) of the second polymerization zone to generate a barrier for preventing the reaction gas mixture of the first polymerization zone from entering the second polymerization zone.

The bottom of the third connecting part (7c) is equipped with a throttling valve (22) having an adjustable opening for adjusting the flow of polyolefin particles from the second polymerization zone into the transition segment (2). For ensuring a reliably transfer of the polymer particles from the second polymerization zone into transition segment (2), the second connecting element (9) is equipped with a gas distribution grid (23).

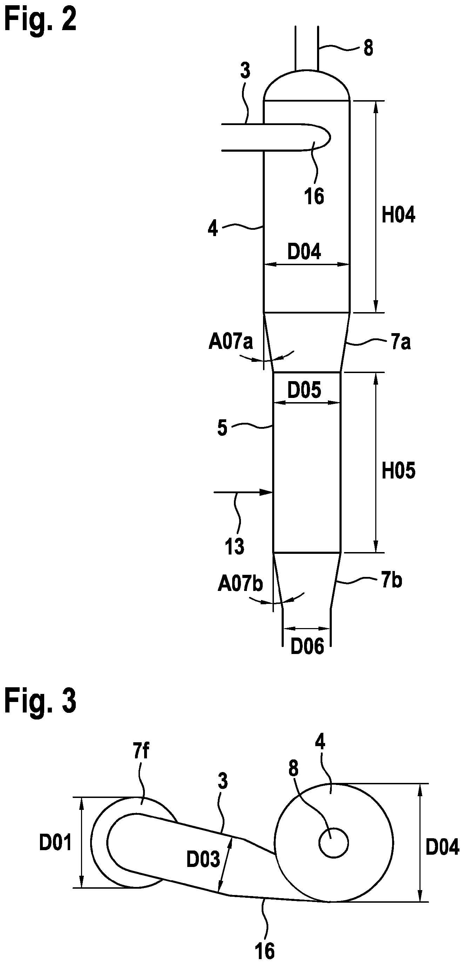

Figure 2 shows schematically the top part of an embodiment of the second polymerization zone according to the present disclosure.

Figure 2 depicts a first connecting element (3) which is connected by a connecting piece (16) to a solid/gas separation zone (4) having a diameter D04 and a height H04. The solid/gas separation zone (4) is connected to an upper part (5) of the second polymerization zone having a diameter D05 and a height H05 by a first connecting part (7a) having an associated angle A07a. The upper part (5) of the second polymerization is connected to a lower part (6) of the second polymerization zone having a diameter D06 by a second connecting part (7b) having an associated angle A07b. Reaction gas separated from the polymer particles in the gas/solid separation zone (4) leaves the gas/solid separation zone (4) through gas recycle line (8). For preventing the reaction gas mixture of the first polymerization zone from entering the upper part (5) of the second polymerization zone, a gas and/or liquid can be fed via line (13) into the upper part (5) of the second polymerization zone.

Figure 3 shows schematically a top view on an embodiment of the apparatus according to the present disclosure.

Figure 3 depicts a first connecting element (3) having a diameter D03 which is at one side connected to a sixth connecting part (7f) and at the other side connected by a connecting piece (16) to a solid/gas separation zone (4) having a diameter D04. Gas recycle line (8) having a diameter D08 is arranged centrically on top of the solid/gas separation zone (4).

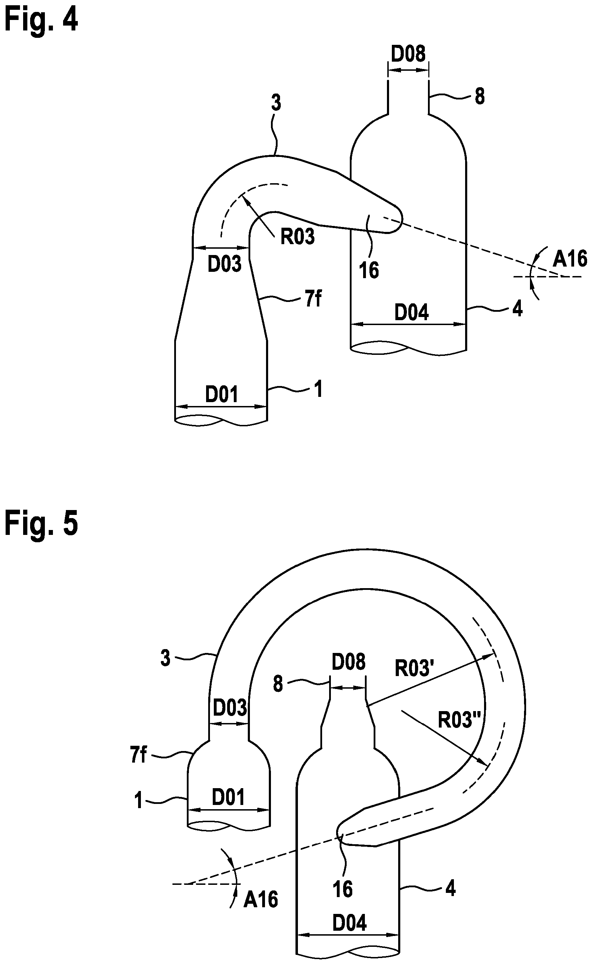

Figures 4 and 5 show schematically two preferred embodiments of first connecting elements of the present disclosure.

Both Figures 4 and 5 depict a first connecting element (3) having a diameter D03 which is at one side connected by a sixth connecting part (7f) to a cylindrical segment (1) of a first polymerization zone having a diameter D01 and at the other side connected by a connecting piece (16) to a solid/gas separation zone (4). Gas recycle line (8) is arranged centrically on top of the solid/gas separation zone (4). The central axis of the connecting piece (16) and the horizontal form an angle A16.

The first connecting element (3) shown in Figure 4 is a tubular element comprising a bend part having a radius R03 and a linear part.

The first connecting element (3) shown in Figure 5 is a bend having in one part of the bend a radius R03' and having in another part of the bend a radius R03".

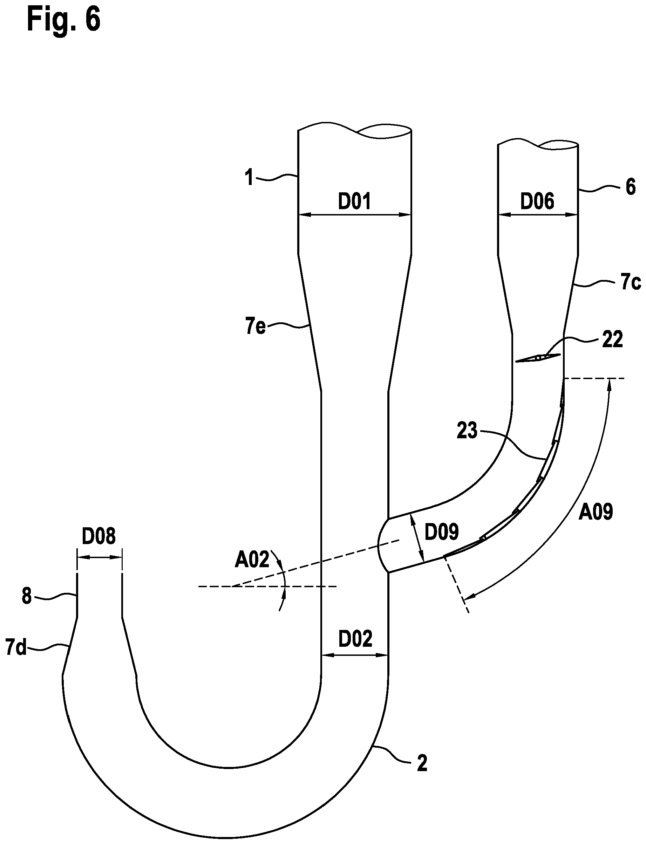

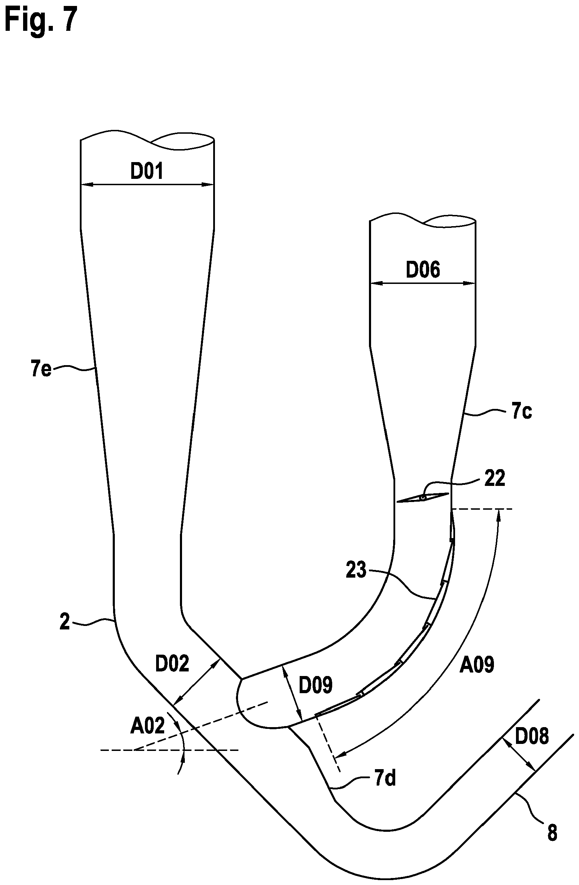

Figures 6 and 7 show schematically two preferred embodiments of transition segments and second connecting elements of the present disclosure.

Both Figures 7 and 8 depict an transition segment (2) having a diameter D02 which is at one side connected by a fifth connecting part (7e) to a cylindrical segment (1) of a first polymerization zone having a diameter D01 and at the other side connected by a fourth connecting part (7d) to a gas recycle line (8). A second connecting element (9) having a diameter D09 is at one side connected by a third connecting part (7c) to a lower part (6) of a second polymerization zone having a diameter D06 and at the other side connected to the transition segment (2). The central axis of the second connecting element (9) at the position where the second connecting element (9) is connected to the transition segment (2) and the horizontal form an angle A02. The second connecting element (9) is provided with a gas distribution grid (23) which extends from the upper end of the second connecting element (9) for an angle A09 along the bending of the second connecting element (9).

The transition segment (2) shown in Figure 6 is a tubular element comprising a bend part and a linear part.

The transition segment (2) shown in Figure 7 is a tubular element comprising two linear parts and a bend part.

The present disclosure further provides a process for preparing an olefin polymer comprising homopolymerizing an olefin or copolymerizing an olefin and one or more other olefins at temperatures of from 20°C to 200°C and pressures of from 0.5 MPa to 10 MPa in the presence of a polymerization catalyst, wherein the polymerization is carried out in an apparatus as described in the above.

Preferably, the polymerization is a homopolymerization of ethylene or a copolymerization of ethylene and one or more other olefins selected from the group consisting of 1-butene, 1-hexene and 1-octene or the polymerization is a homopolymerization of propylene or a copolymerization of propylene and one or more other olefins selected from the group consisting of ethylene, 1-butene and 1-hexene.

The apparatus of the present disclosure may be operated at pressures of from 0.5 MPa to 10 MPa, preferably from 1.0 MPa to 8 MPa and in particular from 1.5 MPa to 4 MPa, wherein these pressures, as all pressures given in the present disclosure, have to be understood as being absolute pressures, i.e. pressure having the dimension MPa (abs). The polymerization is preferably carried out at temperatures of from 30°C to 160°C, particularly preferably from 65°C to 125°C.

The polymerization in the apparatus may also be carried out in a condensing or super-condensing mode, in which part of the circulating reaction gas mixture is cooled to below the dew point and returned to the first polymerization zone either separately as a liquid and a gas-phase or together as a two-phase mixture in order to make additional use of the enthalpy of vaporization for cooling the reaction gas.

In preferred embodiments of the present disclosure, the polymerization is carried out in the presence of an inert gas such as nitrogen or an alkane having from 1 to 10 carbon atoms such as methane, ethane, propane, n-butane, isobutane, n-pentane, isopentane or n-hexane or mixtures thereof. The use of nitrogen or propane as inert gas, if appropriate in combination with further alkanes, is preferred. In especially preferred embodiments of the present disclosure, the polymerization is carried out in the presence of a C₃-C₅ alkane as polymerization diluent and most preferably in the presence of propane, especially in the case of homopolymerization or copolymerization of ethylene. In preferred embodiments of the present disclosure, the reaction gas mixture has a content of inert components from 30 to 99 vol.%, more preferably from 40 to 95 vol.%, and especially from 45 to 85 vol.%. In other preferred embodiments of the present disclosure, especially if the main monomer is propylene, no or only minor amounts of inert diluent are added.

The reaction gas mixtures within the apparatus additionally comprise the olefins to be polymerized, i.e. a main monomer and one or more optional comonomers. The reaction gas mixture may further comprise additional components such as antistatic agents or molecular weight regulators like hydrogen. The components of the reaction gas mixture may be fed into the polymerization zones or into the gas recycle line in gaseous form or as liquid which then vaporizes within the polymerization zones or the gas recycle line.

The polymerization of olefins can be carried out using all customary olefin polymerization catalysts. That means the polymerization can be carried out using Ziegler- or Ziegler-Nattacatalysts, using Phillips catalysts based on chromium oxide, or using single-site catalysts. For the purposes of the present disclosure, single-site catalysts are catalysts based on chemically uniform transition metal coordination compounds. Furthermore, it is also possible to use mixtures of two or more of these catalysts for the polymerization of olefins. Such mixed catalysts are often designated as hybrid catalysts. The preparation and use of these catalysts for olefin polymerization are generally known.

Preferred catalysts are of the Ziegler or Ziegler-Natta type preferably comprising a compound of titanium or vanadium, a compound of magnesium and optionally an electron donor compound and/or a particulate inorganic oxide as a support material.

Catalysts of the Ziegler or Ziegler-Natta type are usually polymerized in the presence of a cocatalyst. Preferred cocatalysts are organometallic compounds of metals of Groups 1, 2, 12, 13 or 14 of the Periodic Table of Elements, in particular organometallic compounds of metals of Group 13 and especially organoaluminum compounds. Preferred cocatalysts are for example organometallic alkyls, organometallic alkoxides, or organometallic halides.

Preferred organometallic compounds comprise lithium alkyls, magnesium or zinc alkyls, magnesium alkyl halides, aluminum alkyls, silicon alkyls, silicon alkoxides and silicon alkyl halides. More preferably, the organometallic compounds comprise aluminum alkyls and magnesium alkyls. Still more preferably, the organometallic compounds comprise aluminum alkyls, most preferably trialkylaluminum compounds or compounds of this type in which an alkyl group is replaced by a halogen atom, for example by chlorine or bromine. Examples of such aluminum alkyls are trimethylaluminum, triethylaluminum, tri-isobutylaluminum, tri-n-hexylaluminum or diethylaluminum chloride or mixtures thereof.

In further preferred embodiments of the present disclosure, the polymerization is a polymerization in an apparatus which is a part of a series of polymerization reactors, wherein also one or more polymerizations in other gas-phase reactors of the series of polymerization reactors may be polymerizations according to the present disclosure. Suitable combinations of such polymerizations reactors include a fluidized-bed reactor followed by an apparatus according to the present disclosure or an apparatus according to the present disclosure followed by a fluidized-bed reactor.

### List of reference signs:

- 1: first polymerization zone
- 2: transition segment
- 3: first connecting element
- 4: gas/solid separation zone
- 5: upper part of the second polymerization zone
- 6: lower part of the second polymerization zone
- 7a: first connecting part connecting the gas/solid separation zone and the upper part of the second polymerization zone
- 7b: second connecting part connecting the upper part and the lower part of the second polymerization zone
- 7c: third connecting part connecting the lower part of the second polymerization zone and the second connecting element
- 7d: fourth connecting part connecting the gas recycle line and the transition segment
- 7e: fifth connecting part connecting the transition segment and the first polymerization zone
- 7f: sixth connecting part connecting the first polymerization zone and the first connecting element
- 8: gas recycle line
- 9: second connecting element
- 10: catalyst feeding line or feeding line for polymer particles from an upstream polymerization reactor
- 11: monomer feeding line
- 12: polymer discharge line
- 13: barrier gas/liquid feeding line
- 14: heat exchanger
- 15: compressor
- 16: connecting piece connecting the first connecting element and the gas/solid separation zone
- 17: guide vanes
- 18: butterfly valve
- 19: recycle gas branch-off line
- 20: transport gas feeding line
- 21: dosing gas feeding line
- 22: throttling valve
- 23: gas distribution grid

## Claims

1. An apparatus for carrying out a gas-phase olefin polymerization comprising
- a first polymerization zone adapted and arranged for growing polymer particles to flow upward under fast fluidization or transport conditions comprising a cylindrical segment (1) having a diameter D01;
- a second polymerization zone adapted and arranged for the growing polymer particles to flow downward comprising a cylindrical upper part (5) having a diameter D05 and a cylindrical lower part (6) having a diameter D06;
- a gas/solid separation zone (4) of a cylindrical shape having a diameter D04 adapted and arranged for separating growing polymer particles from a gas flow which is arranged on top of the upper part (5) of the second polymerization zone and is directly connected to the upper part (5) of the second polymerization zone;
- a tubular first connecting element (3) having a diameter D03 adapted and arranged for connecting the cylindrical segment (1) of the first polymerization zone to the gas/solid separation zone (4);
- a tubular gas recycle line (8) having a diameter D08 adapted and arranged for connecting the gas/solid separation zone (4) to the first polymerization zone;
- a tubular transition segment (2) having a diameter D02 arranged between the gas recycle line (8) and the cylindrical segment (1) of the first polymerization zone; and
- a tubular second connecting element (9) having a diameter D09 adapted and arranged for connecting the lower part (6) of the second polymerization zone to the transition segment (2);
wherein the gas recycle line (8) is equipped with a compressor (15) adapted and arranged for circulating gas in the gas recycle line (8) and a heat exchanger (14) adapted and arranged for removing heat from the gas flowing in the gas recycle line (8);
wherein the ratio of D04 to D05 is from 1.0 to 1.5 and the ratio of D05 to D06 is from 1.2 to 2;
wherein the first connecting element (3) is a bend having a radius R03 or is a tubular element comprising one or more bend parts having one or more radiuses R03 and one or more linear parts and the ratio of R03 to D03 is from 1 to 6 and the ratio of D03 to D01 is from 0.3 to 0.85;
wherein the first connecting element (3) comprises a connecting piece (16), the first connecting element (3) and the gas/solid separation zone (4) are connected by the connecting piece (16), and the connection of the connecting piece (16) to the gas/solid separation zone (4) is tangential and has an inclination so that the central axis of the connecting piece (16) and the horizontal form an angle A16 and the angle A16 is in the range from 0° to 40°;
wherein the transition segment (2) is a bend or is a tubular element comprising one or more bend parts and one or more linear parts and the ratio of D08 to D02 is 1.0 to 2.2; and
wherein the second connecting element (9) is a bend or is a tubular element comprising one or more bend parts and one or more linear parts.

2. The apparatus of claim 1, wherein the central axis of the second connecting element (9) at the position where the second connecting element (9) is connected to the transition segment (2) and the horizontal form an angle A02 and the angle A02 is in the range from 0° to 40°.

3. The apparatus of claim 1 or 2, wherein the apparatus further comprises a line (13) for feeding a barrier gas and/or liquid into the upper part (5) of the second polymerization zone.

4. The apparatus of any of claims 1 to 3, wherein the apparatus further comprises a line (20) for feeding a transport gas into an upper part of the second connecting element (9).

5. The apparatus of claim 4, wherein the second connecting element (9) is provided with a gas distribution grid (23) extending from the upper end of the second connecting element (9) for an angle A09 of at least 50° along the bending of the second connecting element (9).

6. The apparatus of any of claims 1 to 5, wherein the second polymerization zone comprises a throttling valve (22) and the apparatus further comprises a line (21) for feeding a dosing gas into the lower part (6) of the second polymerization zone at one or more positions above the throttling valve (22).

7. The apparatus of any of claims 1 to 6, wherein the compressor (15) is a centrifugal compressor comprising variable guide vanes (17) and the gas recycle line (8) is further equipped with a butterfly valve (18).

8. The apparatus of claim 7, wherein the variable guide vanes (17) are arranged upstream of the centrifugal compressor and the butterfly valve (18) is arranged downstream of the centrifugal compressor.

9. The apparatus of any of claims 1 to 8, wherein the gas/solid separation zone (4) has a height H04 and the ratio of H04 to D04 is 2.5 to 4.5.

10. The apparatus of any of claims 1 to 9, wherein the upper part (5) of the second polymerization zone has a height H05 and the ratio of H05 to D05 is 2 to 4.

11. The apparatus of any of claims 1 to 10, wherein the apparatus is part of a series of polymerization reactors.

12. A process for carrying out a gas-phase olefin polymerization in the apparatus of any of claims 1 to 11 at temperatures of from 20°C to 200°C and pressures of from 0.5 MPa to 10 MPa in the presence of a polymerization catalyst, comprising feeding one or more olefins into the apparatus, contacting the olefins and the polymerization catalyst under reaction conditions and discharging the polymer product from the apparatus, wherein the growing polymer particles flow upward through the first polymerization zone under fast fluidization or transport conditions, leave the first polymerization zone, pass through the gas/solid separation zone and enter the second polymerization zone where the polymer particles flow downward under the action of gravity, leave the second polymerization zone and are at least partially reintroduced into the first polymerization zone, thus establishing a circulation of polymer between the first polymerization zone and the second polymerization zone, wherein the second polymerization zone comprises a bed of densified polymer particles.

13. The process of claim 12, wherein the gas mixture present in the first polymerization zone is completely or partially prevented from entering the upper part (5) of the second polymerization zone by introducing a gas or liquid into the second polymerization zone via a feeding line (13), and the gas mixture present in the second polymerization zone differs from the gas mixture present in the first polymerization zone.

14. The process of claim 13, wherein the surface of the bed of densified polymer particles is located in the upper part (5) of the second polymerization zone.

15. The process of any of claims 12 to 14, wherein the polymerization is a homopolymerization of ethylene or a copolymerization of ethylene and one or more other olefins selected from the group consisting of 1-butene, 1-hexene and 1-octene or the polymerization is a homopolymerization of propylene or a copolymerization of propylene and one or more other olefins selected from the group consisting of ethylene, 1-butene and 1-hexene.

## Patentansprüche

1. Vorrichtung zum Durchführen einer Gasphasen-Olefinpolymerisation, umfassend
- eine erste Polymerisationszone, die angepasst und angeordnet ist, damit wachsende Polymerpartikel unter raschen Verwirbelungs- oder Transportbedingungen aufwärts fließen können, umfassend ein zylindrisches Segment (1) mit einem Durchmesser D01;
- eine zweite Polymerisationszone, die angepasst und angeordnet ist, damit die wachsenden Polymerpartikel abwärts fließen können, umfassend ein zylindrisches Oberteil (5) mit einem Durchmesser D05 und ein zylindrisches Unterteil (6) mit einem Durchmesser D06;
- eine Gas/Feststoff-Trennzone (4) mit einer zylindrischen Form mit einem Durchmesser D04, die angepasst und angeordnet ist, um wachsende Polymerpartikel von einem Gasfluss zu trennen, die oben an dem Oberteil (5) der zweiten Polymerisationszone angeordnet ist und direkt mit dem Oberteil (5) der zweiten Polymerisationszone verbunden ist;
- ein rohrförmiges erstes Verbindungselement (3) mit einem Durchmesser D03, das angepasst und angeordnet ist, um das zylindrische Segment (1) der ersten Polymerisationszone mit der Gas/Feststoff-Trennzone (4) zu verbinden;
- eine rohrförmige Gasrückführleitung (8) mit einem Durchmesser D08, die angepasst und angeordnet ist, um die Gas/Feststoff-Trennzone (4) mit der ersten Polymerisationszone zu verbinden;
- ein rohrförmiges Übergangssegment (2) mit einem Durchmesser D02, das zwischen der Gasrückführleitung (8) und dem zylindrischen Segment (1) der ersten Polymerisationszone angeordnet ist; und
- ein rohrförmiges zweites Verbindungselement (9) mit einem Durchmesser D09, das angepasst und angeordnet ist, um das Unterteil (6) der zweiten Polymerisationszone mit dem Übergangssegment (2) zu verbinden;
wobei die Gasrückführleitung (8) mit einem Kompressor (15), der angepasst und angeordnet ist, um Gas in der Gasrückführleitung (8) zu zirkulieren, und einem Wärmetauscher (14) ausgestattet ist, der angepasst und angeordnet ist, um dem Gas, das in der Gasrückführleitung (8) fließt, Wärme zu entziehen;
wobei das Verhältnis von D04 zu D05 1,0 bis 1,5 beträgt, und das Verhältnis von D05 zu D06 1,2 bis 2 beträgt;
wobei das erste Verbindungselement (3) eine Biegung mit einem Radius R03 oder ein rohrförmiges Element ist, das ein oder mehrere Biegeteile mit einem oder mehreren Radien R03 und ein oder mehrere lineare Teile aufweist, und wobei das Verhältnis von R03 zu D03 1 bis 6 beträgt, und das Verhältnis von D03 zu D01 0,3 bis 0,85 beträgt;
wobei das erste Verbindungselement (3) ein Verbindungsstück (16) umfasst, das erste Verbindungselement (3) und die Gas/Feststoff-Trennzone (4) durch das Verbindungsstück (16) verbunden sind, und die Verbindung des Verbindungsstücks (16) mit der Gas/Feststoff-Trennzone (4) tangential ist und eine solche Neigung hat, dass die Mittelachse des Verbindungsstücks (16) und die Horizontale einen Winkel A16 bilden und der Winkel A16 im Bereich von 0° bis 40° liegt;
wobei das Übergangssegment (2) eine Biegung ist oder ein rohrförmiges Element ist, das ein oder mehrere Biegeteile und ein oder mehrere lineare Teile umfasst, und wobei das Verhältnis von D08 zu D02 1,0 bis 2,2 beträgt; und
wobei das zweite Verbindungselement (9) eine Biegung ist oder ein rohrförmiges Element ist, das ein oder mehrere Biegeteile und ein oder mehrere lineare Teile umfasst.

2. Vorrichtung nach Anspruch 1, wobei die Mittelachse des zweiten Verbindungselements (9) an der Position, an der das zweite Verbindungselement (9) mit dem Übergangssegment (2) verbunden ist, und die Horizontale einen Winkel A02 bilden und der Winkel A02 im Bereich von 0° bis 40° liegt.

3. Vorrichtung nach Anspruch 1 oder 2, wobei die Vorrichtung des Weiteren eine Leitung (13) zum Zuführen eines Barrieregases und/oder einer Barriereflüssigkeit in das Oberteil (5) der zweiten Polymerisationszone umfasst.

4. Vorrichtung nach einem der Ansprüche 1 bis 3, wobei die Vorrichtung des Weiteren eine Leitung (20) zum Zuführen eines Transportgases in ein Oberteil des zweiten Verbindungselements (9) umfasst.

5. Vorrichtung nach Anspruch 4, wobei das zweite Verbindungselement (9) mit einem Gasverteilungsgitter (23) ausgestattet ist, das sich von dem oberen Ende des zweiten Verbindungselements (9) in einem Winkel A09 von mindestens 50° entlang der Biegung des zweiten Verbindungselements (9) erstreckt.

6. Vorrichtung nach einem der Ansprüche 1 bis 5, wobei die zweite Polymerisationszone ein Drosselventil (22) umfasst und die Vorrichtung des Weiteren eine Leitung (21) zum Zuführen eines Dosiergases in das Unterteil (6) der zweiten Polymerisationszone an einer oder mehreren Positionen oberhalb des Drosselventils (22) umfasst.

7. Vorrichtung nach einem der Ansprüche 1 bis 6, wobei der Kompressor (15) ein Zentrifugalkompressor ist, der variable Leitschaufeln (17) umfasst, und die Gasrückführleitung (8) des Weiteren mit einer Drosselklappe (18) ausgestattet ist.

8. Vorrichtung nach Anspruch 7, wobei die variablen Leitschaufeln (17) vorgeordnet zu dem Zentrifugalkompressor angeordnet sind, und die Drosselklappe (18) nachgeordnet zu dem Zentrifugalkompressor angeordnet ist.

9. Vorrichtung nach einem der Ansprüche 1 bis 8, wobei die Gas/Feststoff-Trennzone (4) eine Höhe H04 hat und das Verhältnis von H04 zu D04 2,5 bis 4,5 beträgt.

10. Vorrichtung nach einem der Ansprüche 1 bis 9, wobei das Oberteil (5) der zweiten Polymerisationszone eine Höhe H05 hat und das Verhältnis von H05 zu D05 2 bis 4 beträgt.

11. Vorrichtung nach einem der Ansprüche 1 bis 10, wobei die Vorrichtung Teil einer Reihe von Polymerisationsreaktoren ist.

12. Verfahren zum Durchführen einer Gasphasen-Olefinpolymerisation in der Vorrichtung nach einem der Ansprüche 1 bis 11 bei Temperaturen von 20 °C bis 200 °C und Drücken von 0,5 MPa bis 10 MPa in Gegenwart eines Polymerisationskatalysators, umfassend Zuführen von einem oder mehreren Olefinen in die Vorrichtung, Kontaktieren der Olefine und des Polymerisationskatalysators unter Reaktionsbedingungen, und Austragen des Polymerprodukts aus der Vorrichtung, wobei die wachsenden Polymerpartikel durch die erste Polymerisationszone hindurch unter raschen Verwirbelungs- oder Transportbedingungen aufwärts fließen, die erste Polymerisationszone verlassen, die Gas/Feststoff-Trennzone passieren und in die zweite Polymerisationszone eintreten, wo die Polymerpartikel unter Einwirkung der Schwerkraft abwärts fließen, die zweite Polymerisationszone verlassen und mindestens teilweise wieder in die erste Polymerisationszone eingebracht werden, wodurch eine Zirkulation von Polymer zwischen der ersten Polymerisationszone und der zweiten Polymerisationszone errichtet wird, wobei die zweite Polymerisationszone ein Bett aus verdichteten Polymerpartikeln umfasst.

13. Verfahren nach Anspruch 12, wobei die in der ersten Polymerisationszone vorhandene Gasmischung vollständig oder teilweise am Eintritt in das Oberteil (5) der zweiten Polymerisationszone gehindert wird, indem über eine Zulaufleitung (13) ein Gas oder eine Flüssigkeit in die zweite Polymerisationszone eingebracht wird, und wobei die in der zweiten Polymerisationszone vorhandene Gasmischung sich von der in der ersten Polymerisationszone vorhandenen Gasmischung unterscheidet.

14. Verfahren nach Anspruch 13, wobei die Oberfläche des Bettes von verdichteten Polymerpartikeln sich in dem Oberteil (5) der zweiten Polymerisationszone befindet.

15. Verfahren nach einem der Ansprüche 12 bis 14, wobei die Polymerisation eine Homopolymerisation von Ethylen oder eine Copolymerisation von Ethylen und einem oder mehreren anderen Olefinen ausgewählt aus der Gruppe bestehend aus 1-Buten, 1-Hexen und 1-Octen ist, oder die Polymerisation eine Homopolymerisation von Propylen oder eine Copolymerisation von Propylen und einem oder mehreren anderen Olefinen ausgewählt aus der Gruppe bestehend aus Ethylen, 1-Buten und 1-Hexen ist.

## Revendications

1. Appareil pour mettre en œuvre une polymérisation d'oléfines en phase gazeuse comprenant
- une première zone de polymérisation conçue et agencée pour faire s'écouler vers le haut des particules polymères en croissance dans des conditions de fluidisation ou de transport rapides, comprenant un segment cylindrique (1) présentant un diamètre D01 ;
- une deuxième zone de polymérisation conçue et agencée pour faire s'écouler vers le bas des particules polymères en croissance comprenant une partie supérieure cylindrique (5) présentant un diamètre D05 et une partie inférieure cylindrique (6) présentant un diamètre D06 ;
- une zone de séparation gaz/solide (4) d'une forme cylindrique présentant un diamètre D04, conçue et agencée pour séparer des particules polymères en croissance à partir d'un flux de gaz, qui est agencée sur le dessus de la partie supérieure (5) de la deuxième zone de polymérisation et qui est directement reliée à la partie supérieure (5) de la deuxième zone de polymérisation ;
- un premier élément tubulaire de liaison (3) présentant un diamètre D03, conçu et agencé pour relier le segment cylindrique (1) de la première zone de polymérisation à la zone de séparation gaz/solide (4) ;
- une conduite tubulaire de recyclage de gaz (8) présentant un diamètre D08, conçue et agencée pour relier la zone de séparation gaz/solide (4) à la première zone de polymérisation ;
- un segment tubulaire de transition (2) présentant un diamètre D02, agencé entre la conduite de recyclage de gaz (8) et le segment cylindrique (1) de la première zone de polymérisation ; et
- un deuxième élément de liaison tubulaire (9) présentant un diamètre D09 conçu et agencé pour relier la partie inférieure (6) de la deuxième zone de polymérisation au segment de transition (2) ;
la conduite de recyclage de gaz (8) étant équipée d'un compresseur (15) conçu et agencé pour faire circuler un gaz dans la conduite de recyclage de gaz (8) et d'un échangeur de chaleur (14) conçu et agencé pour éliminer la chaleur à partir du gaz s'écoulant dans la conduite de recyclage de gaz (8) ;
le rapport de D04 à D05 étant de 1,0 à 1,5 et le rapport de D05 à D06 étant de 1,2 à 2 ;
le premier élément de liaison (3) étant un coude présentant un rayon R03 ou étant un élément tubulaire comprenant une ou plusieurs parties coudées présentant un ou plusieurs rayons R03 et une ou plusieurs parties linéaires et le rapport de R03 à D03 étant de 1 à 6 et le rapport de D03 à D01 étant de 0,3 à 0,85 ;
le premier élément de liaison (3) comprenant une pièce de liaison (16), le premier élément de liaison (3) et la zone de séparation gaz/solide (4) étant reliés par la pièce de liaison (16) et la liaison de la pièce de liaison (16) à la zone de séparation gaz/solide (4) étant tangentielle et présentant une inclinaison telle que l'axe central de la pièce de liaison (16) et l'horizontale forment un angle A16 et l'angle A16 étant situé dans la plage de 0° à 40°;
le segment de transition (2) étant un coude ou étant un élément tubulaire comprenant une ou plusieurs parties coudées et une ou plusieurs parties linéaires et le rapport de D08 à D02 étant de 1,0 à 2,2 ; et
le deuxième élément de liaison (9) étant un coude ou étant un élément tubulaire comprenant une ou plusieurs parties coudées et une ou plusieurs parties linéaires.

2. Appareil selon la revendication 1, l'axe central du deuxième élément de liaison (9) au niveau de la position où le deuxième élément de liaison (9) est relié au segment de transition (2) et l'horizontale formant un angle A02 et l'angle A02 étant situé dans la plage de 0° à 40°.

3. Appareil selon la revendication 1 ou 2, l'appareil comprenant en outre une conduite (13) pour introduire un gaz et/ou un liquide barrière dans la partie supérieure (5) de la deuxième zone de polymérisation.

4. Appareil selon l'une quelconque des revendications 1 à 3, l'appareil comprenant en outre une conduite (20) pour introduire un gaz de transport dans une partie supérieure du deuxième élément de liaison (9).

5. Appareil selon la revendication 4, le deuxième élément de liaison (9) étant pourvu d'une grille de distribution de gaz (23) s'étendant à partir de l'extrémité supérieure du deuxième élément de liaison (9) sous un angle A09 d'au moins 50° le long de la courbure du deuxième élément de liaison (9).

6. Appareil selon l'une quelconque des revendications 1 à 5, la deuxième zone de polymérisation comprenant une vanne d'étranglement (22) et l'appareil comprenant en outre une conduite (21) pour introduire un gaz de dosage dans la partie inférieure (6) de la deuxième zone de polymérisation au niveau d'une ou de plusieurs positions au-dessus de la vanne d'étranglement (22).

7. Appareil selon l'une quelconque des revendications 1 à 6, le compresseur (15) étant un compresseur centrifuge comprenant des aubes directrices variables (17) et la conduite de recyclage de gaz (8) étant en outre équipée d'une vanne papillon (18).

8. Appareil selon la revendication 7, les aubes directrices variables (17) étant agencées en amont du compresseur centrifuge et la vanne papillon (18) étant agendée en aval du compresseur centrifuge.

9. Appareil selon l'une quelconque des revendications 1 à 8, la zone de séparation gaz/solide (4) présentant une hauteur H04 et le rapport de H04 à D04 étant de 2,5 à 4,5.

10. Appareil selon l'une quelconque des revendications 1 à 9, la partie supérieure (5) de la deuxième zone de polymérisation présentant une hauteur H05 et le rapport de H05 à D05 étant de 2 à 4.

11. Appareil selon l'une quelconque des revendications 1 à 10, l'appareil faisant partie d'une série de réacteurs de polymérisation.

12. Procédé pour mettre en œuvre une polymérisation d'oléfines en phase gazeuse dans l'appareil selon l'une quelconque des revendications 1 à 11 à des températures de 20°C à 200°C et à des pressions de 0,5 MPa à 10 MPa en présence d'un catalyseur de polymérisation, comprenant l'introduction d'une ou de plusieurs oléfines dans l'appareil, la mise en contact des oléfines et du catalyseur de polymérisation dans des conditions de réaction et l'évacuation du produit polymère de l'appareil, les particules polymères en croissance s'écoulant vers le haut à travers la première zone de polymérisation dans des conditions de fluidisation ou de transport rapides, quittant la première zone de polymérisation, passant à travers la zone de séparation gaz/liquide et entrant dans la deuxième zone de polymérisation où les particules polymères s'écoulent vers le bas sous l'action de la gravité, quittant la deuxième zone de polymérisation et étant au moins partiellement réintroduites dans la première zone de polymérisation, établissant ainsi une circulation de polymère entre la première zone de polymérisation et la deuxième zone de polymérisation, la deuxième zone de polymérisation comprenant un lit de particules polymères densifiées.

13. Procédé selon la revendication 12, l'entrée du mélange gazeux présent dans la première zone de polymérisation dans la partie supérieure (5) de la deuxième zone de polymérisation étant complètement ou partiellement empêchée par introduction d'un gaz ou d'un liquide dans la deuxième zone de polymérisation par l'intermédiaire d'une conduite d'introduction (13) et le mélange gazeux présent dans la deuxième zone de polymérisation étant différent du mélange gazeux présent dans la première zone de polymérisation.

14. Procédé selon la revendication 13, la surface du lit de particules polymères densifiées étant située dans la partie supérieure (5) de la deuxième zone de polymérisation.

15. Procédé selon l'une quelconque des revendications 12 à 14, la polymérisation étant une homopolymérisation d'éthylène ou une copolymérisation d'éthylène et d'une ou de plusieurs autres oléfines choisies dans le groupe constitué par le 1-butène, le 1-hexène et le 1-octène ou la polymérisation étant une homopolymérisation de propylène ou une copolymérisation de propylène et d'une ou de plusieurs autres oléfines choisies dans le groupe constitué par l'éthylène, le 1-butène et le 1-hexène.
